# EUROPEAN PATENT APPLICATION

(11) **EP 1 928 123 A2**
(43) Date of publication of application: **04.06.2008**
(21) Application number: 07022939.8
(22) Date of filing: 27.11.2007
(51) Int. Cl.: H04L 12/24, H04L 12/26

(54) **Operation management system and method for network-connected apparatus, as well as agent for apparatus operation management**

(30) Priority: 01.12.2006 JP 2006325851
(71) Applicant: Fujitsu Ltd., Kawasaki-shi, Kanagawa 211-8588 (JP)
(72) Inventor: Satou, Miyuki, Kawasaki-shi Kanagawa 211-8588 (JP); Kimura, Nobuko, Kawasaki-shi Kanagawa 211-8588 (JP); Miwa, Mitsuhiko, Kawasaki-shi Kanagawa 211-8588 (JP)
(74) Representative: HOFFMANN EITLE

(57) **Abstract**

An operation management system for managing operation of a network-connected apparatus includes an apparatus operation managing agent and a management server. The apparatus operation managing agent is provided in the network-connected apparatus to be managed, and independently manages an operational state of the network-connected apparatus, and autonomously sends, through a network, a management result of the network-connected apparatus managed. The management server receives the management result through the predetermined interface, and manages the received management result so as to manage the network-connected apparatus.

## Description

### BACKGROUND OF THE INVENTION

### 1. Field of the Invention

The present invention relates to an operation management system and method for network-connected apparatuses, and an agent for apparatus operation management that manage operation of apparatuses connected to a network. The invention more particularly relates to an operation management system and method for network-connected apparatuses, and an agent for apparatus operation management that decentralize the load in managing operation and reduce network traffic caused by the management.

### 2. Description of the Related Art

Recent years have seen widespread use of operation management systems for apparatuses connected to a network (hereinafter, "network-connected apparatuses"). In such systems, a management server centrally manages network-connected apparatuses and is capable of collectively detecting malfunctions, faults, etc. occurring in the network-connected apparatuses.

Examples of the network-connected apparatuses include not only communications equipment necessary to configure such a network (e.g. relay apparatuses serving as a relay for wired network), but connecting terminal devices connected to the network as well. Examples of the connecting terminal devices now include electrical appliances, as well as conventional computers.

Based on the current situation where all types of apparatuses and equipments are connected to a network as stated above, various proposals have been made regarding how to configure the operation management systems for network-connected apparatuses to efficiently manage these network-connected apparatuses.

One such proposal has been disclosed in Japanese Patent Application Laid-Open No. H11-168465. In an operation management system for network-connected apparatuses disclosed in this publication, each network-connected apparatus to be managed is provided with a conversion function that converts information of the network-connected apparatus to a format used in a management server, and that also converts information from the management server to a format used in the network-connected apparatus. Providing such function eliminates, even when the network-connected apparatuses use different types of communication interfaces, the need for a management server to have programs for the interfaces of different types. This allows the management server to centrally manage these network-connected apparatuses to be managed, without concerning about such differences in the types of interface of the network-connected apparatuses.

The conventional technology as seen in Japanese Patent Application Laid-Open No. H11-168465 only realizes the conversion function to convert the format of information, and the management server still takes the initiative over management of the network-connected apparatuses. Thus, when the operation management system for network-connected apparatuses is used to manage a number of network-connected apparatuses, the management server has an increasing load in its management processing, causing an increase in traffic due to the amount of information exchanged between the management server and the managed apparatuses.

### SUMMARY OF THE INVENTION

It is an object of the present invention to at least partially solve the problems in the conventional technology.

According to an aspect of the present invention, an operation management system for managing operation of a network-connected apparatus includes an apparatus operation managing agent provided in the network-connected apparatus to be managed. The apparatus operation managing agent performs an apparatus operation management process for independently managing an operational state of the network-connected apparatus, and performs a management result sending process of autonomously sending, through a network, a management result of the network-connected apparatus managed in the apparatus operation management process. The operation management system also includes a management server that performs a management result receiving process of receiving through the predetermined interface the management result sent in the management result sending process, and manages the management result received in the management result receiving process so as to manage the network-connected apparatus to be managed.

According to another aspect of the present invention, an operation management method for managing operation of a network-connected apparatus includes independently managing an operational state of the network-connected apparatus by an apparatus operation managing agent provided in the network-connected apparatus to be managed; autonomously sending a management result by the independently managing the operational state through a network, by the apparatus operation managing agent; and receiving through the network the management result sent from the apparatus operation managing agent, by a management server that centrally manages the network-connected apparatus to be managed.

According to still another aspect of the present invention, an apparatus operation managing agent, provided in a network-connected apparatus to be managed and connected to a management server via a network, includes an apparatus operation management processor that performs an apparatus operation management process of independently managing an operational state of the network-connected apparatus to be managed; and a management result sending processor that performs a management result sending process of autonomously sending, to the management server through a network, a management result of the network-connected apparatus managed by the apparatus operation management processor.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

Fig. 1 is a schematic drawing of a structure of a conventional apparatus operation management system S;
Fig. 2 is a schematic drawing of a structure of an apparatus operation management system S according to an embodiment;
Fig. 3 is a functional block diagram of a structure of an apparatus operation managing agent according to the embodiment;
Fig. 4 is a drawing of specific content of profile managed by a profile managing section;
Fig. 5 is a functional block diagram of a structure of an air conditioner according to the embodiment;
Fig. 6 is a time chart of a sequence for starting up an air conditioner to be managed;
Fig. 7 is a time chart of a sequence for independently managing air conditioner fault;
Fig. 8 is a time chart of a sequence for setting air conditioner temperature; and
Fig. 9 is a time chart of a sequence for managing air conditioner fault by the management server.

### DETAILED DESCRIPTION OF THE PREFERRED EMBODIMENTS

Referring to the accompanying drawings, an embodiment of an operation management system and method for network-connected apparatuses, and an agent for apparatus operation management according to the present invention will be described below in greater detail. As network-connected apparatuses, the following embodiment deals with a plurality of air conditioners connected to a network by way of example. However, the arrangement is not limited to this and general network-connected apparatuses may be connected to a network. Further, although only the air conditioners are connected to the network in the following embodiment, the arrangement is not limited to this, and a wide variety of network-connected apparatuses may be mixed and connected.

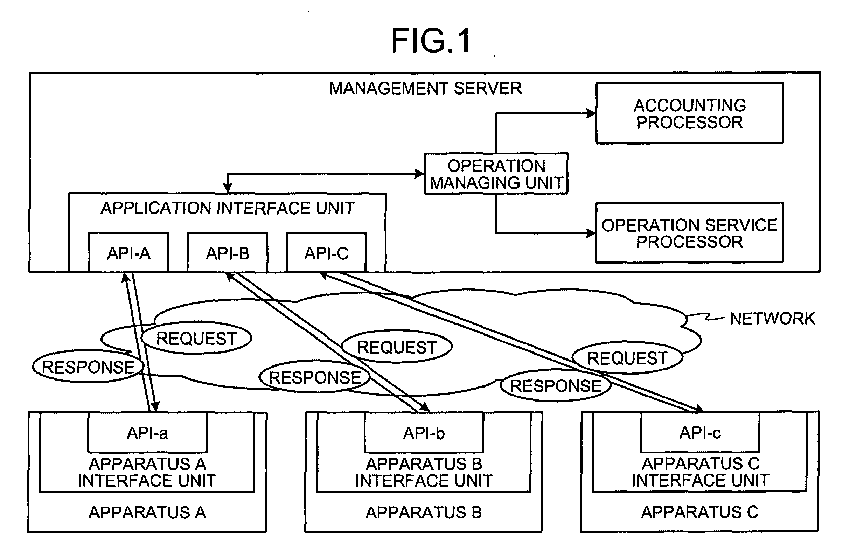

Before describing the embodiment, the following gives an outline of a structure of a conventional operation management system for network-connected apparatuses (hereinafter, "apparatus operation management system") to describe problems with this conventional apparatus operation management system. Fig. 1 is a schematic drawing of a structure of a conventional apparatus operation management system.

As shown in Fig. 1, a management server is connected to three apparatuses (apparatuses A, B, and C) via a network to be in communication with each other. The management server includes an operation managing unit that manages operational states of the apparatuses A, B, and C by sending to the apparatuses requests to obtain operational states of the apparatuses and then determining responses from the apparatuses in response to the requests.

Further, the management server includes an application interface unit serving as an interface for communication between the operation managing unit and the apparatuses. To accommodate different types of the apparatuses, the application interface unit includes an application program interface (API)-A, an API-B, and an API-C to communicate with the apparatuses A, B, and C, respectively. That is, the management server communicates with the apparatuses A, B, and C through the API-A, API-B, and API-C, respectively.

The operation managing unit of the management server is connected to an accounting processor and an operation service processor. The accounting processor performs an accounting process for operational management of the apparatuses based on results of how the operation managing unit manages operation of the apparatuses. The operation service processor performs services for the management of the apparatuses.

On the other hand, the apparatus A includes an apparatus A interface unit having API-a that communicates with the management server over the network. Similarly, the apparatus B includes an apparatus B interface unit having API-b that communicates with the management server over the network, and the apparatus C includes an apparatus C interface unit having API-C that communicates with the management server over the network.

As such, the conventional management server requires its application interface unit to have APIs according to variations in the features of the apparatuses, such as apparatus types. This poses a problem that the application interface unit irrelevantly has a complex structure. That is, to manage operation of the apparatuses, the management server needs to send, to each apparatus to be managed, a request that differs depending on each API used in the each apparatus. The problem becomes serious when more apparatuses are managed and the apparatuses have a wide variety of features such as apparatus types.

In the conventional apparatus operation management system shown in Fig. 1, the management server side takes the initiative over management of the apparatuses. In other words, the operation managing unit of the management server sends to the apparatuses requests to obtain operational states of the apparatuses, so that the management server centrally manages the operational states sent from the apparatuses in response to the requests. Thus, the problem becomes more serious when the management server has an increasing processing load and manages more apparatuses.

Further, the management server needs to send requests to the apparatuses regularly and receive responses from them even when no operational malfunction occurs in the apparatuses. This causes an increase in traffic flowing over the network, and becomes a further serious problem when more apparatuses are managed.

The present invention is made to solve the problems, and an object of the invention is to eliminate the need to change the structure of the application interface unit of the management server, to reduce the processing load of the management server in managing operation of the apparatuses, and to reduce the traffic flowing over the network in managing operation of the apparatuses even when more apparatuses are managed.

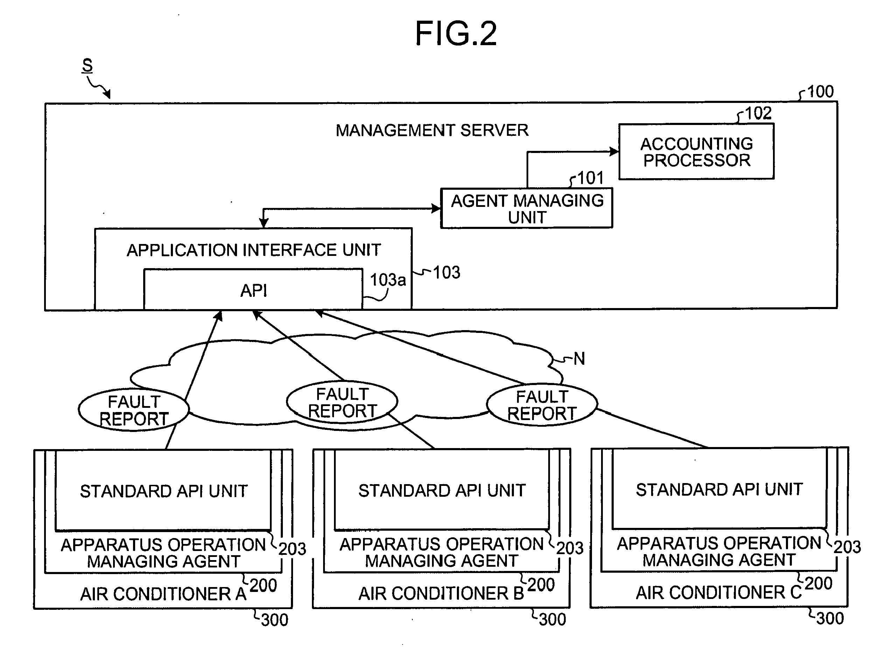

Referring to Figs. 2 to 9, the following describes an embodiment according to the present invention. First, a structure of an apparatus operation management system according to the embodiment is briefly described. Fig. 2 is a schematic drawing of an outline of a structure of an apparatus operation management system according to the embodiment. This encompasses a network structure of the apparatus operation management system. In the following embodiment, management items for apparatuses to be managed refer to items used to manage faults in the apparatuses, such as failures and malfunctions in their behavior.

As shown in Fig. 2, an apparatus operation management system S is arranged such that a management server 100 is connected to three air conditioners 300 (air conditioners A, B, and C) via a network N to be in communication with each other. The management server 100 includes an agent managing unit 101 that manages operational states of the air conditioners 300 (air conditioners A, B, and C) by collecting fault reports from the air conditioners and by, for example, displaying a list of the fault reports to an operation manager of the apparatus operation management system S. The agent managing unit 101 has application software installed therein that enables display of a list of malfunctions or faults occurring in the air conditioners 300.

The management server 100 also includes an application interface unit 103 serving as an interface through which communication is performed between the agent managing unit 101 and the air conditioners 300. The application interface unit 103 includes an API 103a to communicate with the air conditioners 300 each using the same API, i.e., a standard API unit 203, to communicate with the management server 100. Because the management server 100 communicates with each air conditioner 300 through its standard API unit 203, the management server 100 only needs the single API 103a. The term "interface" here is conceptual ideas including both APIs and protocols.

The agent managing unit 101 of the management server 100 is connected to an accounting processor 102 that performs an accounting process for operational management of the air conditioners 300 based on results of how the agent managing unit 101 manages operation of the air conditioners 300.

On the other hand, each of the air conditioners 300 (air conditioners A, B, and C) includes an apparatus operation managing agent 200 that independently manages operation of its air conditioner 300. The apparatus operation managing agent 200, based on inherent functions of the air conditioner 300, autonomously collects information, determines the state of the air conditioner 300, and performs processing necessary to manage the operation. In such manner, the apparatus operation managing agent 200 serves as an agent that manages operation of the air conditioner 300, and operates independently as much as possible. The apparatus operation managing agent 200 also serves to receive a request from the management server 100, and to offer a response according to the content of the request.

The apparatus operation managing agent 200 includes a communications controller 201e that controls communication between its standard API unit 203 and the management server 100 over the network. The apparatus operation managing agent 200 is called "agent" because it manages operation of the air conditioners 300, acting as an agent for the management server 100 that has managed the operation collectively heretofore. Because the apparatus operation managing agents 200 manage operation of the air conditioners 300, instead of the management server 100 having managed the operation collectively, the processing load in this management can be decentralized.

As such, the management server 100 itself does not manage operation of the air conditioners 300, and instead, the apparatus operation managing agents 200, provided in the air conditioners 300, manage operation of the corresponding air conditioners 300. This arrangement allows the processing load of the management server 100 in regard to operational management of the air conditioners 300 to be decentralized to the apparatus operation managing agents 200, realizing a reduction in the load. This prevents an increase in the processing load of the management server 100 even when more air conditioners 300 are managed.

Further, the management server 100 allows its application interface unit 103 to have no APIs according to apparatus types or communication protocols to accommodate variations in the features of the apparatuses such as apparatus types, enabling to prevent the application interface unit 103 from having a complex structure. This eliminates the need to change the structure of the application interface unit 103 even when more apparatuses of types other than those of the air conditioners 300 are managed, thereby causing no complexity in the application interface unit 103.

Further, the management server 100 has no need to send requests to the air conditioners 300 regularly because the apparatus operation managing agents 200, provided in the air conditioners 300, serve instead to manage operation of the air conditioners 300 independently. This allows the management server 100 to receive fault reports from the air conditioners 300 only when operational malfunctions occur in the air conditioners 300. When no operational malfunction occurs in the air conditioners 300, no fault reports are sent from the air conditioners. This realizes a reduction in traffic flowing over the network, enabling to suppress an increase in traffic flowing over the network even when more air conditioners 300 are managed.

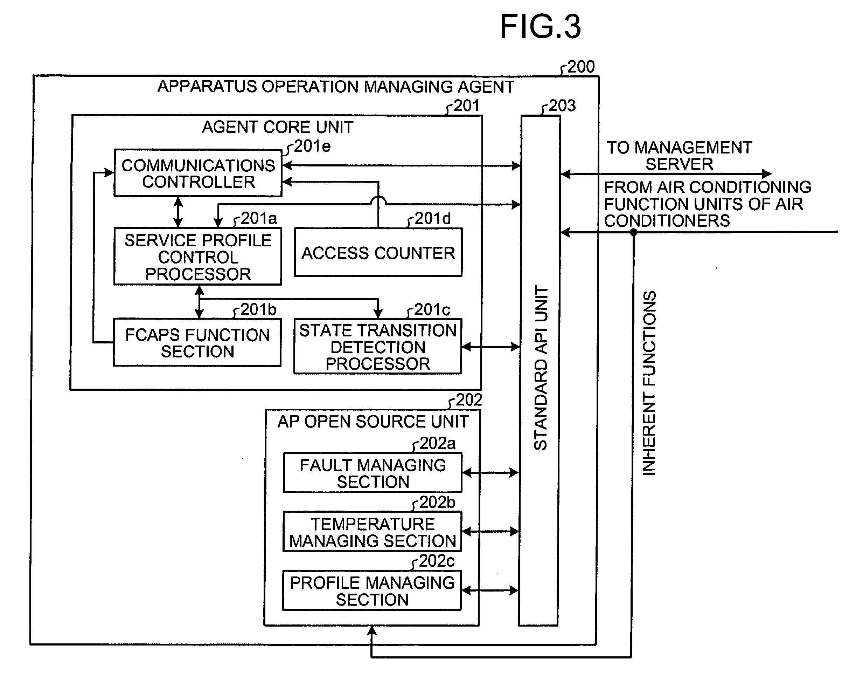

The following describes a structure of the apparatus operation managing agent shown in Fig. 2. Fig. 3 is a functional block diagram of a structure of the apparatus operation managing agent shown in Fig. 2. As shown in Fig. 3, the apparatus operation managing agent 200 includes an agent core unit 201, an Application (AP) open source unit 202, and the standard API unit 203.

The apparatus operation managing agent 200 is installed in a one-chip semiconductor integrated circuit (e.g. IC or large scale integration (LSI)). This allows the apparatus operation managing agent 200 to be installed or embedded in a network-connected apparatus such as the air conditioner 300 in a relatively easy manner.

The agent core unit 201 is a processor that performs basic processing of the apparatus operation managing agent 200, and accounts for a part independent from the type of the apparatus managed by the apparatus operation managing agent 200. That is, the agent core unit 201 is designed and configured to serve as a common function of the apparatus operation managing agents 200, regardless of apparatus types and management items desired to be managed in regard to the apparatuses to be managed.

The agent core unit 201 is an integration of core functions of the apparatus operation managing agent 200. The agent core unit 201 includes a service profile control processor 201a, a fault, configuration, accounting, performance, and security (FCAPS) function section 201b, a state transition detection processor 201c, an access counter 201d, and a communications controller 201e.

The service profile control processor 201a is a processing function section that reads in profile, managed by a profile managing section 202c (described later) of the AP open source unit 202, upon startup of the air conditioner 300, and that provides the processing function sections of the agent core unit 201 with commands on how to perform processing and commands for initialization.

The FCAPS function section 201b serves to perform management with respect to such items as Fault, Configuration, Accounting, Performance, and Security in the apparatus operation management system S. The state transition detection processor 201c manages transition of the state of the air conditioner 300. As to the state to be managed, the state transition detection processor 201c receives a command from the service profile control processor 201a upon startup of the air conditioner 300.

The access counter 201d manages the number of times, the fault report is sent from the apparatus operation managing agent 200 to the management server 100 in the apparatus operation management system S, and so on. The number of times managed by the access counter 201d is sent to the accounting processor 102 of the management server 100 via the FCAPS function section 201b, and used to manage the accounting.

The communications controller 201e determines whether a request received through the standard API unit 203 from the management server 100 is directed to the apparatus operation managing agent 200 corresponding to this communications controller 201e, and then transfers it to the processing function sections of the apparatus operation managing agent 200 as necessary. When information is notified from the apparatus operation managing agent 200 side to the management server 100, the communications controller 201e generates communication data based on this information. In regard to an internet protocol (IP) address of the air conditioner 300 (i.e., IP address of the apparatus operation managing agent 200 in the air conditioner 300, practically) and an IP address of the management server 100, the communications controller 201e receives a command from the service profile control processor 201a upon startup of the air conditioner 300.

The AP open source unit 202 is configured to have a processing function that serves as an interface with inherent functions of the air conditioner 300 and that is depending on apparatus type of the air conditioner 300. That is, the AP open source unit 202 is designed and configured to and is customizable according to apparatus types and management items desired to be managed in the apparatus to be managed. In the present embodiment, the AP open source unit 202 includes a fault managing section 202a, a temperature managing section 202b, and the profile managing section 202c.

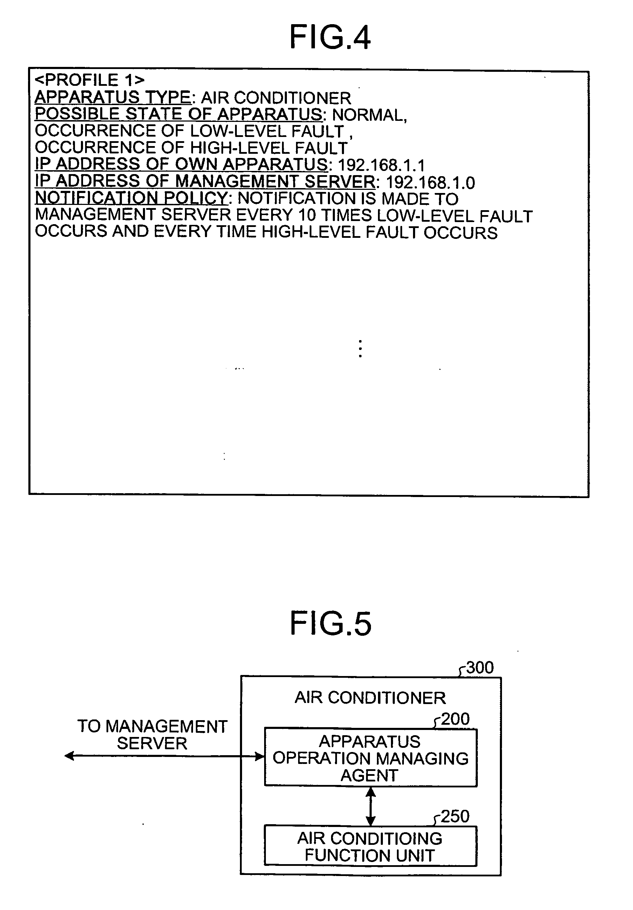

The fault managing section 202a serves to read out information of failures in the air conditioner 300. The temperature managing section 202b has functions to set and control the temperature of the air conditioner 300. The profile managing section 202c stores therein, as profile information, properties and parameters inherent in the air conditioner 300. As shown in Fig. 4, the content of the profile information include, for example, an apparatus type (e.g. air conditioner), possible state(s) of the apparatus (e.g. normal, occurrence of low-level or high-level fault), an IP address of the apparatus (e.g. 192.168.1.1), an IP address of the management server 100 (e.g. 192.168.1.0), and notification policy (e.g. notification is made to the management server 100 every 10 times a low-level fault occurs and every time a high-level fault occurs).

The standard API unit 203 serves as an interface for communication between the agent core unit 201 and the management server 100 and communication between the agent core unit 201 and the AP open source unit 202.

The following describes a structure of the air conditioner shown in Fig. 2. Fig. 5 is a functional block diagram of a structure of the air conditioner shown in Fig. 2. As shown in Fig. 5, the air conditioner 300 includes the apparatus operation managing agent 200 and an air conditioning function unit 250 that are connected to be in bidirectional communication with each other. The apparatus operation managing agent 200 independently manages operation of the corresponding air conditioner 300, and autonomously communicates with the management server 100 for the management. The air conditioning function unit 250 is a processing function to implement inherent functions of the air conditioner 300.

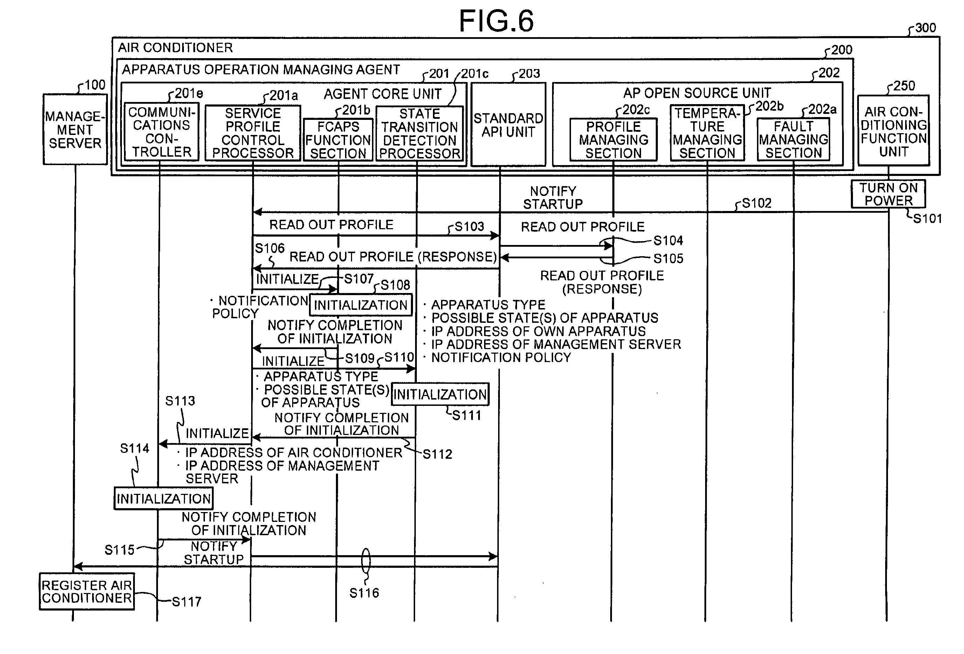

The following describes a process for starting up (startup sequence) of an air conditioner to be managed (air conditioner 300 in the embodiment) that is performed in the apparatus operation management system S shown in Fig. 2. Fig. 6 is a time chart of a startup sequence of the air conditioner to be managed.

As shown in Fig. 6, the air conditioning function unit 250 of the air conditioner 300 initially executes processing to turn on power (Step S101). The air conditioning function unit 250 then provides a startup notification to the service profile control processor 201a of the agent core unit 201 (Step S102).

The service profile control processor 201a, when it receives the startup notification from the air conditioning function unit 250, sends a command to the standard API unit 203 to read out the profile (Step S103). The standard API unit 203 then transfers the command to read out the profile to the profile managing section 202c of the AP open source unit 202 (Step S104).

The profile managing section 202c, when it receives the command to read out the profile, reads out profile information and sends it to the standard API unit 203 (Step S105). The standard API unit 203 sends the profile information to the service profile control processor 201a (Step S106). At Step S106, as the profile information, an apparatus type, possible state(s) of the apparatus, an IP address of the air conditioner, an IP address of the management server, and notification policy is sent from the standard API unit 203 to the service profile control processor 201a.

The service profile control processor 201a then sends to the FCAPS function section 201b an initialization command including the notification policy received at Step S106 (Step S107). The FCAPS function section 201b, when it receives the initialization command from the service profile control processor 201a, performs initialization of all the functions and stored information including the notification policy (Step S108). Upon completion of the initialization at Step S108, the FCAPS function section 201b sends an initialization completion notification to the service profile control processor 201a (Step S109).

The service profile control processor 201a sends to the state transition detection processor 201c an initialization command including the type and possible state(s) of the apparatus received at Step S106 (Step S110). The state transition detection processor 201c, when it receives the initialization command from the service profile control processor 201a, performs initialization of all the functions and stored information including the type and possible state(s) of the apparatus (Step S111). Upon completion of the initialization at Step S111, the state transition detection processor 201c sends an initialization completion notification to the service profile control processor 201a (Step S112).

The service profile control processor 201a sends to the communications controller 201e an initialization command including the IP addresses of both the air conditioner and the management server received at Step S106 (Step S113). The communications controller 201e, when it receives the initialization command from the service profile control processor 201a, performs initialization of all the functions and stored information including the IP addresses of the air conditioner and the management server (Step S114). Upon completion of the initialization at Step S114, the communications controller 201e sends an initialization completion notification to the service profile control processor 201a (Step S115).

The service profile control processor 201a sends to the management server 100 through the standard API unit 203 a startup notification of the corresponding air conditioner 300 (Step S116). The management server 100, when it receives the startup notification at Step S116, registers in a predetermined memory area of its agent managing unit 101 the air conditioner 300 notified by the startup notification (Step S117).

By performing the process for starting up the air conditioner to be managed as described, the profile information, managed by the profile managing section 202c, of the activated air conditioner 300 to be managed is notified to the FCAPS function section 201b, the state transition detection processor 201c, and the communications controller 201e, all provided in the agent core unit 201.

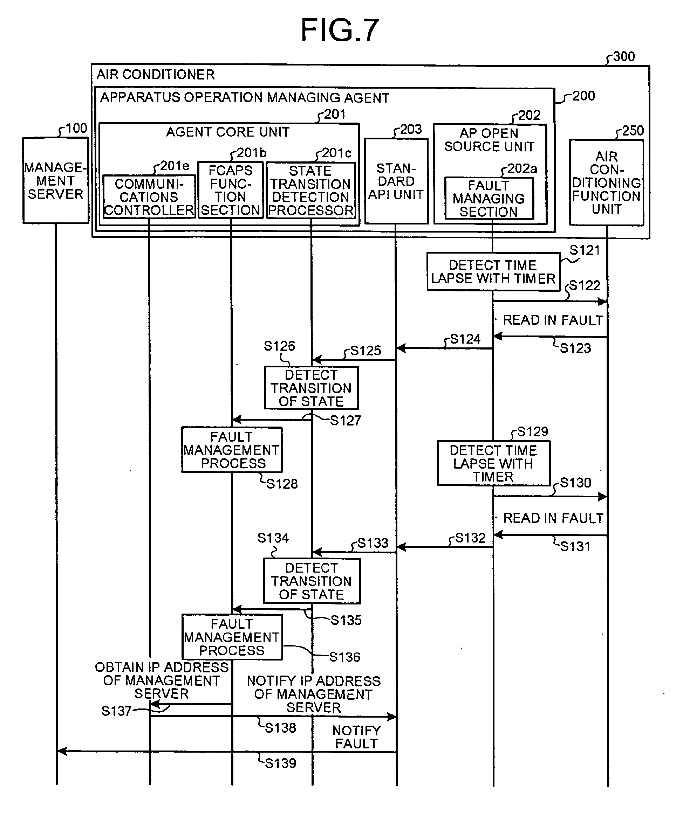

The following describes an air conditioner fault management process independently executed by the apparatus operation managing agent 200 (sequence for independently managing air conditioner fault) in the apparatus operation management system S shown in Fig. 2. Fig. 7 is a time chart of a sequence for independently managing air conditioner fault. As shown in Fig. 7, the fault managing section 202a of the AP open source unit 202 in the apparatus operation managing agent 200 initially executes processing to detect a predetermined time lapse with a timer (Step S121). Specifically, at Step S121, the timer determines that a predetermined time has passed, and the subsequent process at Step S122 is performed based on the determination, with the result that the apparatus operation managing agent 200 can operate independently.

At Step S121, when the timer determines that a predetermined time has passed, the fault managing section 202a requests the air conditioning function unit 250 to read in a fault (fault information report on whether any fault has occurred, and the level of the fault) (Step S122). In response to the request to read in the fault, the air conditioning function unit 250 sends the fault information report to the fault managing section 202a (Step S123). The fault information report is transferred from the fault managing section 202a to the standard API unit 203 (Step 5124), and then from the standard API unit 203 to the state transition detection processor 201c of the agent core unit 201 (Step S125).

The state transition detection processor 201c, when it receives the fault information report from the standard API unit 203 at Step S125, detects transition of the state (Step S126). When no transition is detected at Step S126, Steps S127 and S128 are skipped and the sequence goes to Step S129.

The state transition detection processor 201c, when it detects the transition of the state at Step S126, notifies the detected state transition to the FCAPS function section 201b (Step S127). The FCAPS function section 201b, when it receives notification of the detected state transition from the state transition detection processor 201c, compares the content of the fault with the notification policy, so as to determine whether the content of the fault reaches the criterion defined in the notification policy (fault management process, Step S128).

When the content of the fault reaches the criterion defined in the notification policy, it is notified to the management server 100. When the content of the fault does not reach the criterion defined in the notification policy, no notification is made to the management server 100. Here, the content of the fault does not reach the criterion defined in the notification policy at Step S128, and no notification is made to the management server 100. With this arrangement, information to be notified to the management server 100 is screened according to its importance, and notification is made only when needed. This realizes a reduction in the amount of information stored in the management server 100, enabling to suppress loss of the storage resources of the management server, 100.

Further, the reduction in the amount of information stored in the management server 100 shortens the time necessary for the management server 100 to retrieve information on the operational states of the air conditioners 300.

As at Step S121, the fault managing section 202a detects a predetermined time lapse with a timer (Step S129) . At Step S129, when the timer determines that a predetermined time has passed, the fault managing section 202a requests the air conditioning function unit 250 to read in a fault (Step S130). In response to the request to read in the fault, the air conditioning function unit 250 sends the fault information report to the fault managing section 202a (Step S131). The fault information report is transferred from the fault managing section 202a to the standard API unit 203 (Step S132), and then from the standard API unit 203 to the state transition detection processor 201c of the agent core unit 201 (Step S133).

The state transition detection processor 201c, when it receives the fault information report from the standard API unit 203 at Step S133, detects transition of the state (Step S134). Further, the state transition detection processor 201c, when it detects the transition at Step S134, notifies the detected state transition to the FCAPS function section 201b (Step S135). The FCAPS function section 201b, when it receives the detected state transition from the state transition detection processor 201c, compares the content of the fault with the notification policy, so as to determine whether the content of the fault reaches the criterion defined in the notification policy (fault management process, Step S136). Here, the content of the fault reaches the criterion defined in the notification policy at Step S136, and the notification is made to the management server 100.

The FCAPS function section 201b then requests the communications controller 201e to obtain the IP address of the management server (Step S137). In response to the request to obtain the IP address of the management server, the communications controller 201e sends the IP address of the management server to the standard API unit 203 (Step S138). The standard API unit 203, when it receives the IP address of the management server, provides a fault notification to the management server specified by the IP address of the management server (Step S139).

By performing the air conditioner fault management process independently operated by the apparatus operation managing agent 200 as described, the apparatus operation managing agent 200 independently manages faults in the air conditioning function unit 250 of the air conditioner 300. This enables autonomous report of the fault to the management server 100, when a fault occurs that reaches the criterion defined in the notification policy.

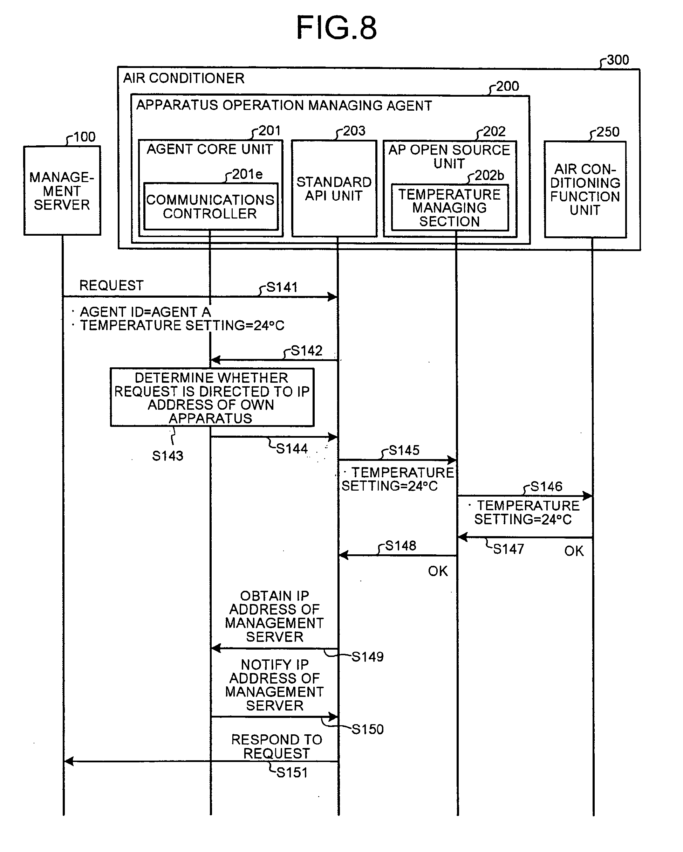

The following describes a process for setting air conditioner temperature (sequence for setting air conditioner temperature) under control of the management server 100 in the apparatus operation management system S shown in Fig. 2. Fig. 8 is a time chart of a sequence for setting air conditioner temperature. As shown in Fig. 8, the management server 100 initially sends a request to control the air conditioner 300 to the standard API unit 203 of the apparatus operation managing agent 200 in this air conditioner 300 (Step S141). The apparatus operation managing agent 200 is specified by defining, for example, agent ID=agent A (the agent ID may be, for example, IP address of the apparatus) to specify an air conditioner 300 to be controlled. Further, specific control items are set by defining, for example, temperature setting=24 degrees centigrade.

The standard API unit 203, when it receives the request from the management server 100, transfers the request received at Step S141 to the communications controller 201e of the agent core unit 201 (Step S142). The communications controller 201e receives the transferred request, and determines whether the request is directed to the IP address of the apparatus that corresponds to this communications controller 201e (Step S143). At Step S143, when it is determined that the request is directed to the IP address of the corresponding apparatus, the sequence goes to the subsequent step S144. On the contrary, when it is determined that the request is not directed to the IP address of the corresponding apparatus, the process for setting air conditioner temperature is terminated at Step S143. Here, the determination at Step S143 finds that the request is directed to the IP address of the corresponding apparatus, and the sequence goes to Step S144.

At Step S144, the communications controller 201e sends to the standard API unit 203 the information indicating a control item, temperature setting = 24 degrees centigrade. The standard API unit 203 receives the information indicating the control item, temperature setting = 24 degrees centigrade, and transfers it to the temperature managing section 202b of the AP open source unit 202 (Step S145). The temperature managing section 202b receives the information indicating the control item, temperature setting=24 degrees centigrade, and sends a control command to make setting according to this control item to the air conditioning function unit 250 (Step S146). The air conditioning function unit 250 receives the control command and sets the temperature setting to 24 degrees centigrade.

The air conditioning function unit 250, when it completes the control process normally based on the control command, sends information indicating normal completion (OK) to the temperature managing section 202b (Step S147). The temperature managing section 202b receives the information indicating the normal completion (OK), and transfers it to the standard API unit 203 (Step S148).

The standard API unit 203, when it receives the information indicating the normal completion (OK), requests the communications controller 201e to obtain the IP address of the management server 100 (Step S149). In response to the request to obtain the IP address of the management server 100, the communications controller 201e sends the IP address of the management server 100 (Step S150). The standard API unit 203 then notifies the management server, specified by the IP address received at Step S150, that the control process is complete normally based on the request (Step S151).

When the control process based on the control command sent at Step S146 is not complete normally (abnormal completion (NG)), information indicating the abnormal completion (NG) is sent at Steps S147, S148, and S151 instead of the information indicating the normal completion (OK) .

By performing the process for setting air conditioner temperature as described, an air conditioning function realized by the air conditioning function unit 250 of the air conditioner 300 can be controlled based on the item set in the request from the management server 100. As such, operation item of the air conditioner 300 is determined based on the command from the management server 100.

In the process for performing air conditioner temperature setting, a trigger for sending a request from the management server 100 to the apparatus operation managing agent 200 of the air conditioner 300 is not specifically described. As a trigger, for example, notification made by the apparatus operation managing agent 200 to indicate a serious malfunction of the corresponding air conditioner 300 may be used to implement a fail safe such as that turns off the air conditioner 300 or that reduces processing load of the air conditioner 300 by changing the temperature setting. As such, the management server 100 can perform feedback control of the air conditioner 300 via the apparatus operation managing agent 200.

The control item included in the request from the management server 100 is not limited to the temperature setting. The control item may include a command to turn on/off the air conditioner 300 and a time to turn on/off power realized by using a timer, or may be any of those items used to control the air conditioner 300.

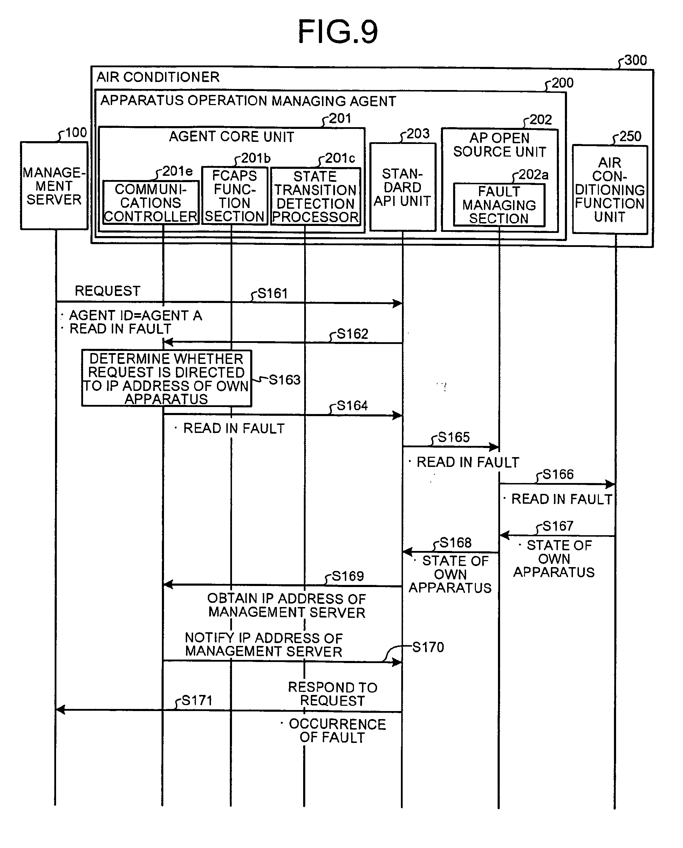

The following describes an air conditioner fault management process performed by the management server 100 (sequence for managing air conditioner fault by the management server) in the apparatus operation management system S shown in Fig. 2. Fig. 9 is a time chart of a sequence for managing air conditioner fault by the management server. As shown in Fig. 9, the management server 100 initially sends the request in regard to management of the air conditioner 300 to the standard API unit 203 of the apparatus operation managing agent 200 in this air conditioner 300 (Step S161). The apparatus operation managing agent 200 is specified by defining, for example, Agent ID=Agent A (the agent ID may be, for example, IP address) to specify the air conditioner 300 to be managed. As the specific request, fault reading is specified.

The standard API unit 203, when it receives the request from the management server 100, transfers the request received at Step S161 to the communications controller 201e of the agent core unit 201 (Step S162). The communications controller 201e receives the transferred request, and determines whether the request is directed to the IP address of the corresponding apparatus (Step S163). At Step S163, when it is determined that the request is directed to the IP address of the corresponding apparatus, the sequence goes to the subsequent step S164. On the contrary, when it is determined that the request is not directed to the IP address of the corresponding apparatus, the air conditioner fault management process requested by the management server is terminated at Step S163. Here, the determination at Step S163 finds that the request is directed to the IP address of the apparatus, and the sequence goes to Step S164.

At Step S164, the communications controller 201e sends to the standard API unit 203 information indicating the request of fault reading. The standard API unit 203, when it receives the information indicating the request of fault reading, transfers it to the fault managing section 202a of the AP open source unit 202 (Step S165). The fault managing section 202a receives the information indicating the request of fault reading, and sends a command to read in fault to the air conditioning function unit 250 (Step S166). The air conditioning function unit 250 receives the command, and sends the state(s) of the corresponding apparatus (normal, occurrence of low-level or high-level fault) to the fault managing section 202a (Step S167). The report on the state(s) of this apparatus is then transferred from the fault managing section 202a to the standard API unit 203 (Step S168).

The standard API unit 203 requests the communications controller 201e to obtain an IP address of the management server (Step S169). In response to the request to obtain an IP address of the management server, the communications controller 201e sends the IP address of the management server to the standard API unit 203 (Step S170). The standard API unit 203 receives the IP address of the management server, and notifies the state(s) of the corresponding apparatus to the management server specified by the IP address of the management server (Step S171).

By performing the air conditioner fault management process by the management server 100 as described, not only the apparatus operation managing agent 200 can independently manage operation of the air conditioner 300, but also, as in a conventional manner, it becomes possible to manage the state(s) of the air conditioner 300 from the management server 100 by using the request from the management server 100. This allows an operation manager to manage the air conditioner 300 as desired, separately from the independent operational management of the air conditioner 300 by the apparatus operation managing agent 200. Further, by sending a request to the apparatus operation managing agent 200 as desired by the operation manager, it also becomes possible to confirm survival of the apparatus operation managing agent 200.

The foregoing describes the embodiment of the present invention, however, the invention is not limited to this and may be practiced in various modifications within the technical idea recited in the claims appended hereto. Further, the advantages of the present invention are not limited to those described in the embodiment.

For example, in the abovementioned embodiment, the apparatus operation managing agent 200 notifies the management server 100 of, as an operational state, occurrence of trouble in the corresponding air conditioner 300 to be managed, based on the notification policy. However, the arrangement is not limited to this, and may be such that various static characteristics including the incidence rate of faults occurring in the air conditioner 300 may be calculated and the result of the statistics may be notified as the operational state to the management server 100.

Further, as to the processes described in the embodiment as being performed automatically, all of or part of these processes may be performed manually. As to the processes described as being performed manually, all of or part of these processes may be performed automatically by known methods. In addition, the processing procedures, controlling procedures, specific names, various types of data and parameters, and other kinds of information shown in the embodiment may be changed in any way unless otherwise specified.

Further, constituting elements shown in the drawings indicate ideational functions, and their physical arrangements are not necessarily the same as those shown in the drawings. Thus, the arrangements of distributing and integrating the apparatuses are not limited to those specifically shown in the drawings, and all of or part of such arrangements may be modified concerning functional and physical aspects in an arbitrary unit, according to loads on and usage of the apparatuses.

Further, as to the processing functions implemented in the apparatuses, all of or any of the functions may be realized by central processing units (CPUs) (or micro computers, such as micro processing units (MPUs) and micro controller units (MCUs)) and programs interpretable or executable by the CPUs (or micro computers, such as MPUs and MCUs), or may be realized by hardware using wired logic.

According to an embodiment of the present invention, the apparatus operation managing agent independently manages the operational states of the network-connected apparatuses to be managed, and sends the management results through a predetermined interface. On the other hand, the management server manages the operational states of the network-connected apparatuses to be managed only by managing the received management results. This brings such an advantage as decentralizing the processing load of the management server in managing the operational states of the network-connected apparatuses. Further, the apparatus operation managing agent autonomously sends the management results through the predetermined interface, allowing one-way communication from the apparatus operation managing agent to the management server without a request from the management server. This brings such advantages as reducing traffic over the network, and avoiding complexity in the interface by using a unified interface.

According to an embodiment of the present invention, an advantage is achieved that the apparatus operation managing agent can be designed and configured so as to accommodate the types of the network-connected apparatuses only by changing the apparatus-dependent processor.

According to an embodiment of the present invention, the apparatus operation management process is performed based on the information specified by the management information. This brings an advantage that the apparatus operation management process can be performed based on desired item and criterion by changing the management information.

According to an embodiment of the present invention, the apparatus operation management process is performed such that the operational states, managed by the operational state managing unit, of the network-connected apparatuses are determined by the core processor. This brings an advantage that selection of an operational state to be notified to the management server from among the operational states can be made as necessary.

According to an embodiment of the present invention, an advantage is achieved that the network-connected apparatuses can be controlled by the apparatus controlling unit based on the control command received from the management server.

According to an embodiment of the present invention, an advantage is achieved that the operational states of the network-connected apparatuses can also be managed based on the operational state management command received from the management server.

According to an embodiment of the present invention, the apparatus operation managing agent is installed in a one-chip integrated circuit. This brings an advantage that the apparatus operation managing agent can be installed or embedded in each network-connected apparatus in a relatively easy manner.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An operation management system for managing operation of a network-connected apparatus, the operation management system comprising:
an apparatus operation managing agent provided in the network-connected apparatus to be managed, the apparatus operation managing agent performing an apparatus operation management process for independently managing an operational state of the network-connected apparatus, and the apparatus operation managing agent performing a management result sending process of autonomously sending, through a network, a management result of the network-connected apparatus managed in the apparatus operation management process; and
a management server that performs a management result receiving process of receiving through the network the management result sent in the management result sending process, and manages the management result received in the management result receiving process so as to manage the network-connected apparatus to be managed.

2. The operation management system according to claim 1, wherein the apparatus operation managing agent comprises a core processor that performs the apparatus operation management process and the management result sending process, regardless of the type of the network-connected apparatus to be managed; and an apparatus-dependent processor that performs the apparatus operation management process depending on the type of the network-connected apparatus to be managed.

3. The operation management system according to claim 2, wherein
the apparatus-dependent processor further comprises an operational state managing unit that manages an operational state of the network-connected apparatus to be managed; and a management information managing unit that manages management information necessary for the operational state managing unit to manage the operational state of the network-connected apparatus to be managed, and
the core processor and the apparatus-dependent processor perform the apparatus operation management process based on the management information managed by the management information managing unit.

4. The operation management system according to claim 3, wherein the apparatus operation management process is performed such that the operational state, managed by the operational state managing unit, of the network-connected apparatus to be managed is notified to and determined by the core processor.

5. The operation management system according to claim 2, wherein
the apparatus-dependent processor further comprises an apparatus controlling unit that controls the network-connected apparatus to be managed, and
the apparatus controlling unit controls the network-connected apparatus based on a control command received from the management server.

6. The operation management system according to claim 2, wherein the core processor and the apparatus-dependent processor manage the operational state of the network-connected apparatus, based on an operational state management command received from the management server.

7. The operation management system according to claim 1, wherein the apparatus operation managing agent is installed in a one-chip integrated circuit.

8. An operation management method for managing operation of a network-connected apparatus, the operation management method comprising:
independently managing an operational state of the network-connected apparatus by an apparatus operation managing agent provided in the network-connected apparatus to be managed;
autonomously sending a management result by the independently managing the operational state through a network, by the apparatus operation managing agent; and
receiving through the network the management result sent from the apparatus operation managing agent, by a management server that centrally manages the network-connected apparatus to be managed.

9. The operation management method according to claim 8, wherein
the independently managing the operational state includes a core processing that is performed regardless of the type of the network-connected apparatus to be managed and an apparatus-dependent processing that is performed depending on the type of the network-connected apparatus to be managed, and
the autonomously sending the management result is performed as the core processing.

10. The operation management method according to claim 9, wherein the apparatus-dependent processing includes managing the operational state of the network-connected apparatus to be managed and managing management information necessary to manage the operational state of the network-connected apparatus to be managed in the managing the operational state; and, in the core processing and the apparatus-dependent processing, the managing operational state is performed based on the management information managed in the managing the management information.

11. The operation management method according to claim 10, wherein the independently managing the operational state is performed such that the operational state, managed in the managing operational state, of the network-connected apparatus to be managed is notified to and determined by the core processing.

12. The operation management method according to claim 9, wherein the apparatus-dependent processing further includes controlling the network-connected apparatus to be managed, and
the controlling the network-connected apparatus is performed based on a control command received from the management server.

13. The operation management method according to claim 9, wherein, in the core processing and in the apparatus-dependent processing, the operational state of the network-connected apparatus is managed based on an operational state management command received from the management server.

14. The operation management method according to claim 8, wherein the apparatus operation managing agent is installed in a one-chip integrated circuit.

15. An apparatus operation managing agent, provided in a network-connected apparatus to be managed and connected to a management server via a network, the apparatus operation managing agent comprising:
an apparatus operation management processor that performs an apparatus operation management process of independently managing an operational state of the network-connected apparatus to be managed; and
a management result sending processor that performs a management result sending process of autonomously sending, to the management server through the network, a management result of the network-connected apparatus managed by the apparatus operation management processor.

16. The apparatus operation managing agent according to claim 15, further comprising: a core processor that performs the apparatus operation management process and the management result sending process, regardless of the type of the network-connected apparatus to be managed; and an apparatus-dependent processor that performs the apparatus operation management process depending on the type of the network-connected apparatus to be managed.

17. The apparatus operation managing agent according to claim 16, wherein
the apparatus-dependent processor further comprises:
an operational state managing unit that manages the operational state of the network-connected apparatus to be managed; and a management information managing unit that manages management information necessary for the operational state managing unit to manage the operational state of the network-connected apparatus to be managed, and
the core processor and the apparatus-dependent processor perform the apparatus operation management process based on the management information managed by the management information managing unit.

18. The apparatus operation managing agent according to claim 17, wherein the apparatus operation management process is performed such that the operational state, managed by the operational state managing unit, of the network-connected apparatus to be managed is notified to and determined by the core processor.

19. The apparatus operation managing agent according to claim 16, wherein the apparatus-dependent processor further comprises an apparatus controlling unit that controls the network-connected apparatus to be managed, and
the apparatus controlling unit controls the network-connected apparatus based on a control command received from the management server.

20. The apparatus operation managing agent according to claim 16, wherein the core processor and the apparatus-dependent processor manage the operational state of the network-connected apparatus, based on an operational state management command received from the management server.

21. The apparatus operation managing agent according to claim 15, wherein the apparatus operation managing agent is installed in a one-chip integrated circuit.
